# EUROPÄISCHE PATENTANMELDUNG

(11) **EP 0 672 894 A2**
(43) Veröffentlichungstag der Anmeldung: **20.09.1995**
(21) Anmeldenummer: 95810143.8
(22) Anmeldetag: 06.03.1995
(51) Int. Cl.: G01F 1/712

(54) **Verfahren und Vorrichtung zur Auswertung von Doppelbelichtungsaufnahmen**

(30) Priorität: 19.03.1994 DE 4409472
(71) Anmelder: ABB RESEARCH LTD., CH-8050 Zürich 11 (CH)
(72) Erfinder: Höcker, Rainer, Dr., CH-5415 Nussbaumen (CH)
(74) Vertreter: Rzehak, Herbert

(57) **Zusammenfassung**

Doppelbelichtungsaufnahmen (3) werden zur Bestimmung der Geschwindigkeit von Partikeln in einem Fluid verwendet, wobei 2 Laserblitze in einem vorgebbaren zeitlichen Abstand die Partikel belichten. Aus der Doppelbelichtungsaufnahme (3) wird die Geschwindigkeit der Partikel mittels Autokorrelation, die durch 2 aufeinanderfolgende Fouriertransformationen ersetzt ist, bestimmt. Dazu wird ein kohärenter, paralleler Lichtstrahl (L1) senkrecht durch die Doppelbelichtungsaufnahme (3) geschickt und mittels einer plankonvexen 1. Fourierlinse (4) auf einen analogen Bildwandler (5) fokussiert, der ein optisch adressierbarer Flüssigkristall-Lichtmodulator ist. Das dort entstandene Bild wird von einem parallelen 2. Lichtstrahl (L2) von einem 2. He-Ne-Laser (2) über einen halbdurchlässigen Spiegel (6) beleuchtet. Dieser 2. Lichtstrahl (L2) wird im Bildwandler (5) phasenmoduliert und reflektiert. Das reflektierte Licht gelangt durch den halbdurchlässigen Spiegel (6) zur 2. Fourierlinse (7), die es auf eine Fourier-Transformationsebene (8) fokussiert. Das dort entstehende Bild wird mittels des optoelektrischen Bildwandlers (11) digitalisiert und in einem Rechner ausgewertet. Dadurch, daß zwischen den beiden Fouriertransformationen keine digitale Umwandlung erfolgt, läßt sich eine schnellere Auswertung mit höherer Genauigkeit erreichen.

## Beschreibung

### TECHNISCHES GEBIET

Bei der Erfindung wird ausgegangen von einem Verfahren und von einer Vorrichtung zur Auswertung von Doppelbelichtungsaufnahmen nach dem Oberbegriff der Patentansprüche 1 und 3.

### STAND DER TECHNIK

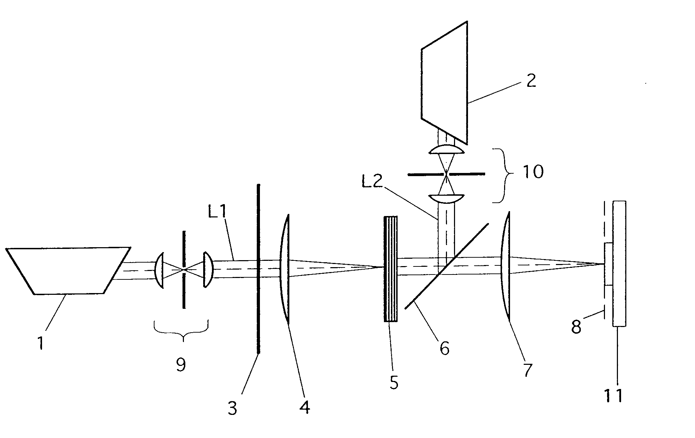

Mit den Oberbegriffen der Patentansprüche 1 und 3 nimmt die Erfindung auf einen Stand der Technik Bezug, wie er aus der USA-Zeitschrift: Experimental Thermal and Fluid Science, 1992, S. 586 - 604, bekannt ist. Dort ist in Verbindung mit Fig. 8 eine Auswerteinrichtung von Doppelbelichtungsaufnahmen beschrieben, bei der Laserlicht durch eine Doppelbelichtungsaufnahme geschickt, mittels einer Linse fokussiert, von einer Videokamera aufgenommen und auf einer Flüssigkristallanzeigeeinrichtung, wie sie z. B. in Taschenfernsehempfängern Anwendung findet, dargestellt wird. Das so entstandene Flüssigkristallbild wird von einem 2. Laserlichtstrahl durchstrahlt, mittels einer 2. Linse fokussiert und von einem Lichtdetektor bzw. von einer 2. Videokamera aufgenommen, digitalisiert und die digitale Information an einen Rechner zur Auswertung übermittelt.

Wegen des diskreten, binären Aufbaus des Flüsigkristallbildschirms hat sich dieses Verfahren zur Durchführung einer 2dimensionalen Autokorrelation der Geschwindigkeitsvektoren von Geschwindigkeitsfeldern, die als Bildinformation in einer Doppelbelichtungsaufnahme enthalten sind, nicht bewährt. Diese Autokorrelation wird mittels 2er hintereinanderfolgender, optischer Fouriertransformationen durch die beiden sog. Fourierlinsen bewirkt. Bei der Fouriertransformation treten kleinskalige, räumliche Strukturen im Frequenzraum groß hervor. Starke Strukturen im Ortsbereich erzeugen hohe Intensitäten im Frequenzbereich. Die gitterartige Pixelstruktur des Flüssigkristallbildschirms überwiegt daher im Frequenzbereich. Die eigentliche Information muß in einer aufwendigen Bildnachbearbeitung herausgefiltert werden.

Eine ähnliche Bildauswertung mittels 2er optischer Fouriertransformationen ist von B. Javidi und C.-J, Kuo, Joint transform image correlation using a binary spatial light modulator at the Fourier plane, Applied Optics, Vol. 27, No. 4, 15. 2. 1988, S. 663 - 665, beschrieben.

Nähere Informationen zur Auswertung von Geschwindigkeitsinformationen, die in einer Doppelbelichtungsaufnahme enthalten sind, sind einer Veröffentlichung von R. Höcker und J. Kompenhans, Some technical improvements of Particle Image Velocimetry with regard to its application in wind tunnels, Proceedings of the international congress on instrumentation in aerospace simulation facilities - ICIASF 1989, DLR Research Center Göttingen, 18. - 21. 9. 1989, S. 545 - 554, zu entnehmen.

Zum einschlägigen Stand der Technik wird zusätzlich auf den Prospekt: LC-Lichtmodulatoren - Bauelemente optoelektronischer Meßtechnik, 04/1992, zu beziehen von: Jenopitk GmbH, Geschäftsbereich Optoelektronik, Carl-Zeiss-Straße 1, D-07743 Jena, verwiesen, in dem ein optisch adressierbarer Flüssigkristall-Lichtmodulator angegeben ist, wie er bei der vorliegenden Erfindung als Bildwandler eingesetzt werden kann.

### DARSTELLUNG DER ERFINDUNG

Die Erfindung, wie sie in den Patentansprüchen 1 und 3 definiert ist, löst die Aufgabe, ein Verfahren und eine Vorrichtung zur Auswertung von Doppelbelichtungsaufnahmen der eingangs genannten Art derart weiterzuentwickeln, daß eine Autokorrelation der in einer Doppelbelichtungsaufnahme enthaltenen Bildinformation, abgesehen von einer unvermeidlichen Digitalisierung des Endergebnisses, nur anlogoptisch durchführbar wird.

Vorteilhafte Ausgestaltungen der Erfindung sind in den abhängigen Patentansprüchen definiert.

Ein Vorteil der Erfindung besteht darin, daß eine aufwendige Bildnachbearbeitung entfällt und die Auswertung damit schneller möglich ist. Zeitbegrenzende Faktoren sind jetzt nur noch die Digitalisierung des Endergebnisses und die Ansprechzeit des Bildwandlers von z. Z. ca. 20 ms.

Die analoge Arbeitsweise des Autokorrelators macht die Auswertung präziser.

Gemäß einer vorteilhaften Ausgestaltung der Erfindung wird ein Bildwandler eingesetzt, der gegenüber diskreten Flüssigkristallbildschirmen eine höhere räumliche Auflösung aufweist und Diskretisierungsfehler vermeidet, da er mit analoger Modulation arbeitet. Insgesamt wird sowohl hinsichtlich der Geschwindigkeit der Auswertung als auch hinsichtlich der erreichbaren Genauigkeit eine wesentliche Verbesserung erzielt.

### KURZE BESCHREIBUNG DER ZEICHNUNG

Die Erfindung wird nachstehend anhand eines Ausführungsbeispiels erläutert. Die einzige Figur zeigt einen analogoptischen Autokorrelator mit einem Flüssigkristallbildwandler zur Auswertung von Doppelbelichtungsaufnahmen.

### WEG ZUR AUSFÜHRUNG DER ERFINDUNG

Von einer 1. Lichtquelle, vorzugsweise von einem preiswerten He-Ne-Laser (1), wird vorzugsweise kohärentes Licht durch ein 1. Raumfrequenzfilter (9) als ein 1. Lichtstrahl (L1) mit einem Durchmesser von vorzugsweise 1 mm senkrecht durch ein Diapositiv bzw. durch eine Doppelbelichtungsaufnahme (3) geschickt und nachfolgend von einer konvexen, vorzugsweise von einer plankonvexen Linse bzw. von einer 1. Fourierlinse (4) auf eine zum 1. Lichtstrahl (L1) senkrechte 1. Bildfläche eines optisch adressierbaren Flüssigkristall-Lichtmodulators bzw. eines analogen Bildwandlers (5) fokussiert. Von einer 2. Lichtquelle, vorzugsweise von einem preiswerten He-Ne-Laser (2), wird vorzugsweise kohärentes Licht durch ein 2. Raumfrequenzfilter (10) als ein 2. Lichtstrahl (L2) mit einem Durchmesser von vorzugsweise 1 mm als paralleles Strahlenbündel über einen halbdurchlässigen Spiegel (6) auf eine zum 2. Lichtstrahl (L2) senkrechte 2. Bildfläche des Bildwandlers (5) gelenkt, die dessen 1. Bildfläche gegenüberliegt.

Im Bildwandler (5) wird dieser 2. Lichtstrahl (L2) durch die Bildinformation der Doppelbelichtungsaufnahme (3) moduliert, vorzugsweise phasenmoduliert, und reflektiert. Der reflektierte 2. Lichtstrahl (L2) gelangt zurück durch den halbdurchlässigen Spiegel (6) auf eine mit ihrer planen Fläche senkrecht zum Strahlengang angeordnete 2. konvexe, vorzugsweise plankonvexe Linse bzw. 2. Fourierlinse (7), welche das eintreffende Licht auf eine senkrecht zum Strahlengang angeordnete FourierTransformationsebene (8) fokussiert. Das in der FourierTransformationsebene (8) entstandene Bild wird mittels eines optoelektrischen Bildwandlers (11) oder eines bildauflösenden elektronischen Detektors, z. B. einer Videokamera, aufgenommen. Dieser optoelektrische Bildwandler (11) liefert digitale Bildsignale an einen nicht dargestellten Rechner, der diese Bildsignale in üblicher Weise auswertet.

Die Raumfrequenzfilter (9) und (10) weisen je eine Lochblende im Brennpunkt zwischen 2 konvexen, vorzugsweise plankonvexen Linsen auf; sie dienen zur Eliminierung von Inhomogenitäten im Lichtstrahl (L1) bzw. (L2). Praktisch werden dafür Mikroskopobjektive verwendet.

Die Doppelbelichtungsaufnahme (3) kann senkrecht zum Lichtstrahl (L1) in vertikaler und horizontaler Richtung bewegt und somit zeilenweise ausgewertet werden. Zur Herstellung einer Doppelbelichtungsaufnahme (3) werden von festen oder flüssigen Partikeln, deren Geschwindigkeit in einem Fluidstrom bestimmt werden soll, in einem vorgebbaren Zeitabstand (im Bereich von ca. 1 µs - 100 µs) mittels Laserblitzen 2 Aufnahmen auf demselben Diapositiv angefertigt. Je größer die Partikelgeschwindigkeit, desto größer ist deren Bildabstand.

Durch eine Autokorrelation, die durch eine 2malige Fouriertransformation ersetzbar ist, werden die beiden Bilder eines Partikels fiktiv zur Deckung gebracht. Die beiden Fouriertransformationen werden mittels der beiden Fourierlinsen (4) und (7) bewirkt. Wichtig ist, daß zwischen den beiden Fouriertransformationen keine digitale Bildumwandlung erfolgt, sondern eine analoge optisch-elektrische und eine analoge elektrisch-optische in dem Lichtmodulator bzw. Bildwandler (5).

Der Bildwandler (5) besteht aus einer in Dünnschichttechnik hergestellten Mehrschichtstruktur aus einem Photoableiter, einer Flüssigkristallschicht, einem dielektrischen Spiegelsystem und aus transparenten Elektroden auf Glassubstraten. Die an die Elektroden angelegte Spannung teilt sich belichtungsabhängig zwischen Halbleiter und Flüssigkristall auf. Dadurch ist eine bildhafte Modulation der optischen Aktivität der Flüssigkristallschicht möglich, vgl. den eingangs genannten Prospekt der Firma Jenoptik, Lichtmodulator SLM Typ 300 p/01.

Von dem He-Ne-Laser (1) wird ein 1. Lichtstrahl (L1) durch die Doppelbelichtungsaufnahme (3) geschickt. Die danach im Lichtstrahl (L1) enthaltene Bildinformation wird mittels der beiden Fourierlinsen (4) und (7) 2 aufeinanderfolgenden analogoptischen Fouriertransformationen unterworfen, welche im Ergebnis 1. bzw. 2. Fouriertransformierte liefern. Das Bild dieser so entstandenen Inversfunktion wird nach einer optoelektrischen Umwandlung im optoelektrischen Bildwandler (11) mittels des nicht dargestellten Rechners digital ausgewertet.

Dabei wird die 1. Fouriertransformierte im Bildwandler (5), ohne Zwischenschaltung einer digitalen Umwandlung, unter Mithilfe des 2. Laserstrahls (L2) und des Bildwandlers (5) wieder in eine Bildinformation umgewandelt und danach der 2. analog-optischen Fouriertransformation unterworfen.

Durch die optisch adressierbare Lichtmodulation im Bildwandler (5) wird die optische Bildinformation der 1. Fouriertransformierten in eine dieser Bildinformation entsprechende elektrische Bildinformation und danach diese elektrische Bildinformation wieder in eine dieser entsprechende optische Bildinformation umgewandelt.

### BEZEICHNUNGSLISTE

- 1, 2: Lichtquelle, Laser, He-Ne-Laser
- 3: Doppelbelichtungsaufnahme, Diapositiv
- 4, 7: Fourierlinsen, plankonvexe Linsen
- 5: analoger Bildwandler, optisch adressierbarer Flüssigkristall-Lichtmodulator
- 6: halbdurchlässiger Spiegel
- 8: Fourier-Transformationsebene
- 9, 10: Raumfrequenzfilter
- 11: optoelektrischer Bildwandler, bildauflösender elektronischer Detektor, Videokamera
- L1, L2: Lichtstrahlen

## Patentansprüche

1. Verfahren zur Auswertung einer Doppelbelichtungsaufnahme (3),
a) wobei ein 1. Lichtstrahl (L1) durch die Doppelbelichtungsaufnahme (3) geschickt und die danach im Lichtstrahl (L1) enthaltene Bildinformation 2 aufeinanderfolgenden analog-optischen Fouriertransformationen unterworfen wird, welche im Ergebnis 1. bzw. 2. Fouriertransformierte liefern,
b) wobei das Bild dieser so entstandenen Inversfunktion nach einer optoelektrischen Umwandlung digital ausgewertet wird,
dadurch gekennzeichnet,
c) daß diese 1. Fouriertransformierte nach einer optisch adressierbaren Lichtmodulation, ohne Zwischenschaltung einer digitalen Umwandlung, der 2. analog-optischen Fouriertransformation unterworfen wird.

2. Verfahren nach Anspruch 1, dadurch gekennzeichnet, daß durch die optisch adressierbare Lichtmodulation die optische Bildinformation der 1. Fouriertransformierten in eine dieser Bildinformation entsprechende elektrische Bildinformation und danach diese elektrische Bildinformation wieder in eine dieser entsprechende optische Bildinformation umgewandelt wird.

3. Vorrichtung zur Auswertung einer Doppelbelichtungsaufnahme (3) zur Durchführung des Verfahrens nach Anspruch 1
a) mit einer 1. Lichtquelle (1) zur Erzeugung eines 1. Lichtstrahles (L1) und
b) einer 1. Fourierlinse (4) im Strahlengang dieses 1. Lichtstrahles (L1),
c) wobei die Doppelbelichtungsaufnahme (3) zwischen der 1. Lichtquelle (1) und dieser 1. Fourierlinse (4) angeordnet ist,
d) mit einer 2. Lichtquelle (2) zur Erzeugung eines 2. Lichtstrahles (L2),
e) mit einem optoelektrischen Bildwandler (11) im Strahlengang dieses 2. Lichtstrahles (L2) und
f) mit einer 2. Fourierlinse (7) im Strahlengang dieses 2. Lichtstrahles (L2) vor dem optoelektrischen Bildwandler (11),
dadurch gekennzeichnet,
g) daß ein analoger, optisch adressierbarer Lichtmodulator (5) sowohl im Strahlengang der 1. Lichtquelle (1) als auch im Strahlengang der 2. Lichtquelle (2) angeordnet ist.

4. Vorrichtung nach Anspruch 3, dadurch gekennzeichnet, daß der optisch adressierbarer Lichtmodulator (5) zwischen der 1. Fourierlinse (4) und der 2. Fourierlinse (7) angeordnet ist.

5. Vorrichtung nach Anspruch 3 oder 4, dadurch gekennzeichnet, daß zwischen dem optisch adressierbaren Lichtmodulator (5) und der 2. Fourierlinse (7) ein teilweise durchlässiger Spiegel (6) angeordnet ist, der Licht (L2) von der 2. Lichtquelle (2) teilweise auf den optisch adressierbaren Lichtmodulator (5) lenkt, und der von dem optisch adressierbaren Lichtmodulator (5) reflektiertes Licht teilweise zur 2. Fourierlinse (7) durchläßt.

6. Vorrichtung nach einem der Ansprüche 3 bis 5, dadurch gekennzeichnet, daß der optisch adressierbare Lichtmodulator (5) ein Flüssigkristall-Lichtmodulator ist.

7. Vorrichtung nach einem der Ansprüche 3 bis 6, dadurch gekennzeichnet, daß eine 1. Bildfläche des optisch adressierbaren Lichtmodulators (5) im Brennpunkt der 1. Fourierlinse (4) angeordnet ist.

8. Vorrichtung nach Anspruch 7, dadurch gekennzeichnet, daß eine der 1. Bildfläche gegenüberliegende 2. Bildfläche des optisch adressierbaren Lichtmodulators (5) von einem parallelen Strahlenbündel (L2) der 2. Lichtquelle (2) bestrahlt ist.
